# EUROPEAN PATENT SPECIFICATION

(11) **EP 1 900 922 B1**
(45) Date of publication and mention of the grant of the patent: **24.05.2017**
(21) Application number: 07110239.6
(22) Date of filing: 14.06.2007
(51) Int. Cl.: F02B 61/02, F02B 77/13, B62M 7/12, F02B 67/06

(54) **Soundproof Structure**
Schalldichte Struktur
Structure insonorisée

(30) Priority: 14.09.2006 JP 2006250104
(43) Date of publication of application: 19.03.2008
(73) Proprietor: HONDA MOTOR CO., LTD., Tokyo 107-8556 (JP)
(72) Inventor: Wako, Hiroshi, Saitama 351-0193 (JP); Hibiya, Junsei, Saitama 351-0193 (JP)
(74) Representative: Rupp, Christian

(56) References cited:
- EP-A1- 1 164 263
- FR-A1- 2 732 741
- JP-A- 3 124 920
- JP-A- 2000 008 950
- JP-U- S6 367 649

## Description

The present invention relates to soundproof structure of a power source or a power transmission device.

As this type of soundproof structure, cover structure for covering a prime mover part of a working machine is disclosed in JP-A 2002-317463.

The cover structure disclosed in an embodiment of JP-A 2002-317463 is a cover with double structure in which a hollow part is formed between an inner wall and an outer wall. Also, the cover structure is provided with a resonator for damping operating noise by resonance, with a hole provided in the inner wall.

Since the soundproof structure is provided on the cover covering the prime mover part rather than on a case forming the prime mover part, even when the prime mover part requires no cover, it is necessary to provide a special cover for sound proofing. Therefore, the cover occupies much space, thereby upsizing the prime mover part and increasing the number of parts and the cost.

When the cover itself has the double structure and the volume of the hollow part is ensured in order to obtain the effect as the resonator, the cover is increased in thickness, thereby further upsizing the prime mover part.

JP 2000 008950 A relates to a chain cover for reducing the vibration and noise of the specific frequency of an engine. Thereby, the cover provides a plurality of ribs formed on the backside of a chain cover, an attenuation plate being combined so as to cover a block rib forming a ring shape projection part and an installation hole being provided on the surface of the attenuation plate.

JP 03 124920 A discloses a device for damping noise inside a cylinder head cover by providing a plurality of resonators therein. Thereby, the device comprises a cylinder head cover having a box formed integrally on the bottom surface of a sealing board. A plurality of resonators is formed on the bottom plate for sealing the opening part of the box by drilling through holes in the places corresponding to respective chambers. Thereby, at least one of the respective chambers is set to a different value for respective resonators so that the resonators resonate with noise of a different frequency.

Accordingly, the present invention has been made in view of the foregoing, and an object of the present invention is to provide soundproof structure that has a small number of parts and is compact and low-cost by utilizing ribs provided to be protruded on an inner face of a case of a power source or a power transmission device.

In order to accomplish the above-mentioned object, the invention described in Claim 1 provides a soundproof structure wherein ribs on an inner face of a case of a power source or a power transmission device are protruding to form a plurality of same form tubular bodies; a lid member covers an opening facing an inside of the case of the plurality of tubular bodies formed by the ribs to form a plurality of tubular body inside spaces; and the plurality of tubular body inside spaces, and an internal space of the case communicate with each other through a hole bored in the lid member.

The invention described in Claim 2 is characterized in that, in the soundproof structure described in Claim 1, the case serves as a transmission case for housing a belt continuously variable transmission for transmitting power of an internal combustion engine.

The invention described in Claim 3 is characterized in that, in the soundproof structure described in Claim 1 or 2, the at least one of rib includes a plurality of ribs, the ribs being linearly formed on the inner face of the case, and the single or plurality of tubular bodies in a square tube shape are formed by the plurality of parallel ribs and the plurality of parallel ribs intersecting therewith.

According to the soundproof structure described in Claim 1, a lid member covers an opening of a tubular body formed by ribs protruded on an inner face of a case of a power source or a power transmission device to form a tubular body inside space, and the tubular body inside space and an internal space of the case communicate with each other through a hole bored in the lid member. Thus, a soundproof effect can be obtained by composing a resonator for damping operating noise by resonance.

Since the resonator is composed, without a special cover for sound proofing, by utilizing the ribs protruded on the inner face of the case, it is possible to provide the soundproof structure that is compact, reduced in the number of parts, and low-cost.

According to the soundproof structure described in Claim 2, this structure is applied to a transmission case for housing a belt continuously variable transmission for transmitting power of an internal combustion engine, thereby composing the resonator utilizing the ribs protruded on the inner face of the transmission case. Therefore, since it is unnecessary to compose the resonator while protruding the resonator to the outside of the case, upsizing of the case can be avoided, and a high soundproof effect can be obtained.

According to the soundproof structure described in Claim 3, the ribs are linearly formed on the inner face of the case, and the single or plurality of tubular bodies in a square tube shape are formed by the plurality of parallel ribs and the plurality of parallel ribs intersecting therewith. Thus, it is possible to increase the reinforcing function of the case, and to easily form a large number of tubular bodies in the square tube shape. Also, the high soundproof effect can be expected.
Fig. 1 is a general side view of a motorcycle mounted with a power unit incorporating the soundproof structure according to an embodiment of the present invention.
Fig. 2 is a side view, with portions removed, of the power unit.
Fig. 3 is a left side view of a transmission case.
Fig. 4 is a sectional view of the transmission case (a sectional view taken along the line IV-IV of Fig. 3).

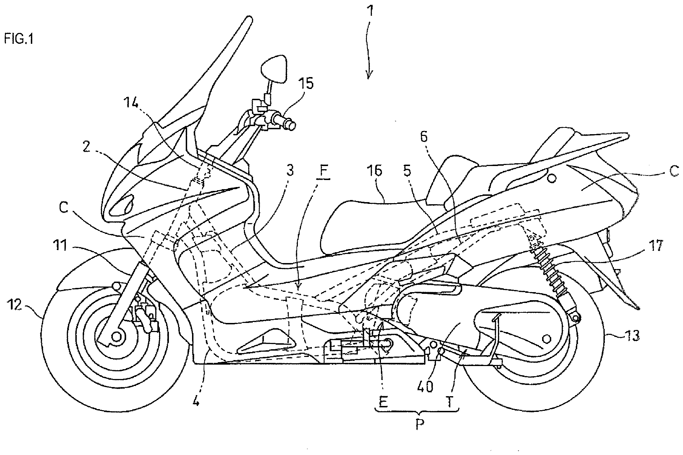

An embodiment of the present invention will be explained below with reference to Figs. 1 to 4.

The soundproof structure according to this embodiment is applied to a transmission case of a power unit P mounted on a motorcycle 1.

Fig. 1 is a general side view of the motorcycle 1.

A body frame F is covered with a body cover C to compose a vehicle body. The power unit P supported by the body frame F is composed of a water-cooled, single-cylinder, four-stroke internal combustion engine E, and a belt continuously variable transmission T provided to extend rearwardly with deviation to the left side from the internal combustion engine E. A crankshaft 25 of the internal combustion engine E is mounted on the body frame F in a transverse-mounted attitude in which the crankshaft 25 is directed to the vehicle width direction.

In this embodiment, the terms "up and down", "front and rear", and "left and right" refer to the directions viewed on the basis of the motorcycle 1.

The body frame F is provided with a head pipe 2 on a front end portion, a pair of left and right main frames 3 tilted downwardly from the head pipe 2 to extend rearwardly, a pair of left and right down tubes 4 extending substantially vertically downward from the head pipe 2, bent to extend substantially horizontally rearward, and connected to rear portions of the main frames 3, a pair of left and right seat rails 5 connected to portions slightly closer to the rear than the center of the main frames 3 and tilted upwardly to extend rearward, and a pair of left and right rear frames 6 for connecting rear portions of the main frames 3 to rear portions of the seat rails 5.

A front wheel 12 is journaled to lower ends of front forks 11 turnably supported by the head pipe 2, and a rear wheel 13 is journaled to a reduction gear mechanism provided on a rear portion of the belt continuously variable transmission T provided to extend in the rear of the power unit P.

On an upper end of a steering shaft 14 integrated with the front fork 11, a handlebar 15 is provided in a laterally spread manner.

In the power unit P, the internal combustion engine E on a front portion thereof is swingably supported by the body frame F at the vehicle body center portion, and a rear cushion 17 is interposed between a rear end portion of the belt continuously variable transmission T and seat rails 5 for supporting a tandem seat 16.

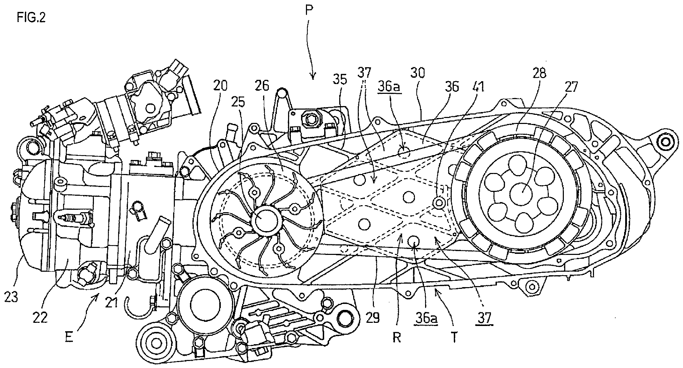

Referring to Fig. 2 that is a general side view, with portions omitted, of the power unit P, a front portion of a unit case of the power unit P composes a crankcase 20 of the internal combustion engine E. Also, a cylinder block 21, a cylinder head 22, and a cylinder head cover 23 are arranged in a sequentially overlapped manner while protruding forwardly from the crankcase 20, and are mutually integrally connected.

The unit case is divided into left and right portions. The left unit case forming a portion of the crankcase 20 extends rearwardly to compose a transmission case 30 for housing the belt continuously variable transmission T.

The transmission case 30 is longitudinally long, opened to the left, and covered with a transmission case cover 40 from the left side. Also, a power transmission chamber 41 for housing the belt continuously variable transmission T is formed inside the transmission case 30.

Fig. 2 is a side view of the power unit P, with the transmission case cover 40 removed.

In front of the power transmission chamber 41, a driving pulley 26 is provided on a left end of the crankshaft 25 journaled to the crankcase 20 of the internal combustion engine E so as to be directed to the lateral direction. A driven shaft 27 is journaled to the rear of the power transmission chamber 41, and a driven pulley 28 is provided on the driven shaft 27.

A V-belt 29 is extended between the driving pulley 26 in front and the driven pulley 28 in the rear to compose the belt continuously variable transmission T.

In the transmission case 30, the periphery of the belt continuously variable transmission T is surrounded with an outer peripheral wall 31, and a left end surface of the outer peripheral wall 31 serves as a mating surface 31a with the transmission case cover 40.

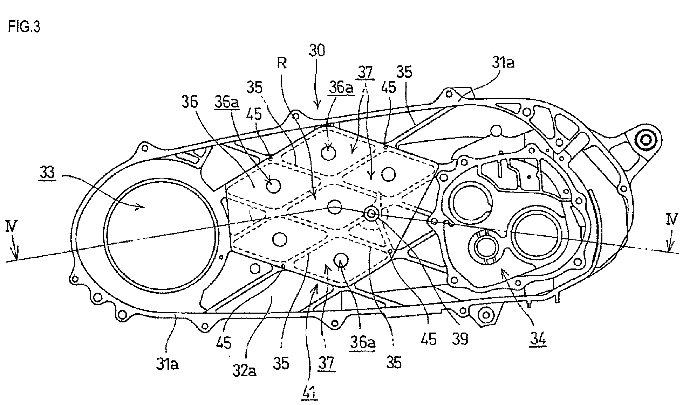

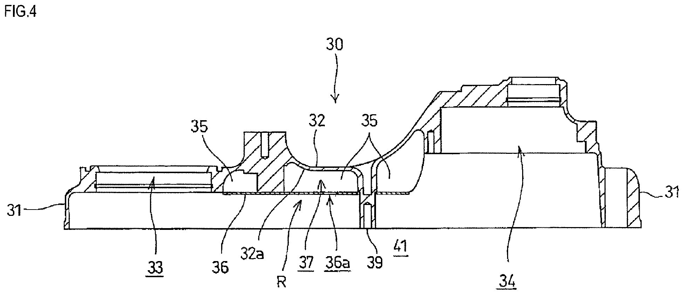

Fig. 3 is a left side view of the transmission case 30, and shows the power transmission chamber 41. Fig. 4 shows a sectional view of the transmission case 30.

Referring to Figs. 3 and 4, a vertical side wall 32 surrounded with the outer peripheral wall 31 of the transmission case 30 has a circular bearing hole 33 allowing the crankshaft 25 to pass through in front thereof, and a recess 34 for housing the reduction gear mechanism in the rear thereof. A plurality of ribs 35 are formed to be protruded on an inner face 32a between the circular bearing hole 33 and the recess 34 to maintain rigidity and strength of the transmission case 30.

The ribs 35 formed to be protruded on the inner face 32a of the side wall 32 of the transmission case 30 are linearly formed, and a plurality of tubular bodies in the square (rhomboidal) tube shape are formed by the plurality of parallel ribs 35 and the plurality of parallel ribs 35 intersecting therewith.

The end faces of the ribs are almost flush with one another. A partially tabular lid member 36 abuts on the end faces of the ribs 35, and simultaneously covers openings of the plurality of tubular bodies to form a tubular body inside space 37 for each tubular body.

The lid member 36 is fixedly secured by screws 45 at four peripheral edge portions thereof, to be mounted.

Also, on the inner face 32a of the transmission case 30, a mounting boss portion 39 used in mounting the transmission case cover 40 is formed to be protruded partially to the left. A through hole through which the mounting boss portion 39 passes through is formed in the lid member 36. When the lid member 36 is mounted on the ribs 35, the mounting boss portion 39 passes through the through hole to protrude to the left.

Furthermore, a circular hole 36a corresponding to each of the tubular body inside spaces 37 is bored in the lid member 36. The power transmission chamber 41 inside the transmission case 30 and the tubular body inside spaces 37 communicate with each other through the circular holes 36a.

More specifically, on the inner face 32a of the transmission case 30 for housing the belt continuously variable transmission T, the tubular body inside spaces 37 formed by dividing the space into a plurality of parts by utilizing the ribs 35 are provided so as to communicate with the power transmission chamber 41 through the circular holes 36a, and compose a resonator R.

Thus, the resonator R formed on the inner face 32a of the transmission case 30 can damp the operating noise of the internal combustion engine E, the belt continuously variable transmission T, or the like by resonance.

By properly setting the volume or number of the tubular body inside spaces 37, or the circular holes 36a, it is possible to effectively damp sound of a specific frequency, such as engine sound or transmission sound, by resonance.

The transmission case 30 not only serves to house the belt continuously variable transmission T but also serves as a case composing the belt continuously variable transmission T, and incorporates the soundproof structure in which the resonator R is formed on the transmission case 30. The soundproof structure is not the structure in which a cover is additionally provided and the resonator is formed on the cover. Therefore, the power unit P is not increased in size.

Since the resonator R is formed by utilizing the ribs 35 formed to be protruded on the inner face 32a of the transmission case 30, it is possible to provide the soundproof structure with a small number of parts at low cost.

The resonator R is formed on the inner face of the transmission case 30 by utilizing the ribs 35. Therefore, it is unnecessary to form the resonator while protruding the resonator to the outside of the case, thereby avoiding an increase in size of the transmission case 30, and a high soundproof effect can be obtained by deadening the sound with the resonator R provided at the inner face of the transmission case 30 that is closer to a sound source.

The plurality of ribs 35 are linearly formed on the inner face 32a of the transmission case 30, and the plurality of tubular bodies in the square (rhomboidal) tube shape are formed by the plurality of parallel ribs 35 and the plurality of parallel ribs 35 intersecting therewith. Thus, it is possible to increase the reinforcing function of the case, and to easily form a large number of tubular body inside spaces 37 by using the plurality of tubular bodies. The high soundproof effect can be expected by the most effective setting.

By changing the shape of the lid member 36, the number of the tubular body inside spaces 37 formed by closing the openings of the tubular bodies can be easily changed. In addition, the sizes of the circular holes 36a formed in the lid member 36 can be easily changed, thereby easily applying the lid member 36 to the power units P different in model.

The lid member formed according to the shapes of the openings of the tubular bodies, with a hole bored in the center thereof, may be fitted in the openings of the respective tubular bodies to form a plurality of tubular body inside spaces. Also, there are various methods for mounting the lid member.
- F: Body frame
- C: Body cover
- P: Power unit
- E: Internal combustion engine
- T: Belt continuously variable transmission
- R: Resonator
- 1: Motorcycle
- 20: Crankcase
- 25: Crankshaft
- 26: Driving pulley
- 27: Driven shaft
- 28: Driven pulley
- 29: V-belt
- 30: Transmission case
- 31: Outer peripheral wall
- 32: Side wall
- 32a: Inner face
- 33: Circular bearing hole
- 34: Recess
- 35: Rib
- 36: Lid member
- 36a: Circular hole
- 37: Tubular body inside space
- 40: Transmission case cover
- 41: Power transmission chamber
- 45: Screw

## Claims

1. Soundproof structure of a transmission case (30) for housing a belt continuously variable transmission for transmitting power of an internal combustion engine (E), wherein:
ribs (35) on an inner face (32a) of the transmission case (30) are protruding to form a plurality of tubular bodies;
ribs (35) are linearly formed, and a plurality of tubular bodies in the rhomboidal tube shape are formed by the plurality of parallel ribs (35) and the plurality of parallel ribs (35) intersecting at regular intervals therewith;
a lid member (36) covers an opening facing an inside of the transmission case (30) of the plurality of tubular bodies formed by the ribs (35) to form a plurality of tubular body inside spaces; and
the plurality of tubular body inside spaces, and an internal space of the case communicate with each other through a hole bored in the lid member (36).

2. The soundproof structure according to Claim 1,
wherein
the at least one rib (35) comprises a plurality of ribs, the ribs being linearly formed on the inner face of the case; and
the single or plurality of tubular bodies in a square tube shape are formed by the plurality of parallel ribs and the plurality of parallel ribs intersecting therewith.

## Patentansprüche

1. Schallisolierte Konstruktion eines Getriebegehäuses (30) zum Aufnehmen eines stufenlos variablen Riemengetriebes zum Übertragen von Leistung einer Brennkraftmaschine (E) wobei:
Rippen (35) an einer inneren Fläche (32a) des Getriebegehäuses (30) hervorstehen, um eine Mehrzahl von Röhrenkörpern zu bilden;
die Rippen (35) geradlinig gebildet sind und eine Mehrzahl von Röhrenkörpern in der rhomboiden Röhrenform durch die Mehrzahl von parallelen Rippen (35) gebildet wird und die Mehrzahl von parallelen Rippen (35) sich damit in regelmäßigen Abständen schneiden;
ein Deckelelement (36) eine Öffnung abdeckt, die einer Innenseite des Getriebegehäuses (30) der Mehrzahl von röhrenförmigen Körpern, die durch die Rippen (35) gebildet werden, um Innenräume einer Mehrzahl von Röhrenkörpern zu bilden; und
die Innenräume der Mehrzahl von Röhrenkörpern und ein innerer Raum des Gehäuses durch ein Loch miteinander verbunden sind, das in das Deckelelement (36) gebohrt ist.

2. Schallisolierte Konstruktion gemäß Anspruch 1, wobei
die wenigstens eine Rippe (35) eine Mehrzahl von Rippen umfasst, wobei die Rippen geradlinig an einer inneren Fläche des Gehäuses gebildet sind; und
der eine oder die Mehrzahl von röhrenförmigen Körpern in einer quadratischen Röhrenform durch die Mehrzahl von parallelen Rippen gebildet sind und die Mehrzahl von parallelen Rippen sich damit schneiden.

## Revendications

1. Structure insonorisée d'un boîtier de transmission (30) pour l'accueil d'une transmission à variation continue à courroie pour transmettre la puissance d'un moteur à combustion interne (E), dans laquelle :
des nervures (35) sur une face interne (32a) du boîtier de transmission (30) sont en saillie pour former une pluralité de corps tubulaires ;
des nervures (35) sont formées linéairement, et une pluralité de corps tubulaires en forme de losange sont formés par la pluralité de nervures parallèles (35) et la pluralité de nervures parallèles (35) s'intersectant à intervalles réguliers avec celles-ci ;
un élément de couvercle (36) recouvre une ouverture faisant face à un intérieur du boîtier de transmission (30) de la pluralité de corps tubulaires formés par les nervures (35) pour former une pluralité d'espaces intérieurs aux corps tubulaires ; et
la pluralité d'espaces intérieurs aux corps tubulaires, et un espace interne du boîtier communiquent par le biais d'un trou percé dans l'élément de couvercle (36).

2. Structure insonorisée selon la revendication 1, dans laquelle :
l'au moins une nervure (35) comprend une pluralité de nervures, les nervures étant formées linéairement sur la face intérieure du boîtier ; et
le corps tubulaire unique ou la pluralité de corps tubulaires en forme de carré sont formés par la pluralité de nervures parallèles et la pluralité de nervures parallèles s'intersectant avec celles-ci.
